# EUROPEAN PATENT APPLICATION

(11) **EP 2 216 660 A2**
(43) Date of publication of application: **11.08.2010**
(21) Application number: 10151724.1
(22) Date of filing: 26.01.2010
(51) Int. Cl.: G01S 7/18, G01S 13/95

(54) **Systems and methods for displaying radar-measured turbulence intensity on a vertical display**

(30) Priority: 05.02.2009 US 366353
(71) Applicant: Honeywell International Inc., Morristown, NJ 07962 (US)
(72) Inventor: Christianson, Paul E., Morristown, NJ 07962-2245 (US); Grove, Michael, Morristown, NJ 07962-2245 (US)
(74) Representative: Buckley, Guy Julian

(57) **Abstract**

Weather radar detecting systems and methods are operable to display a vertical view (602) of intensities of turbulence regions (112, 114, 116). An exemplary embodiment has a radar (210) operable to detect turbulence, a processing system (212) operable to determine location and intensity of the detected turbulence, a three-dimensional (3-D) weather information database (236) comprising of a plurality of voxels that is associated with a unique geographic location with respect to the aircraft (104) wherein the information corresponding to the turbulence intensity is stored, and a display (222) operable to display a vertical view of a selected vertical slice (306), wherein the displayed vertical view (602) displays the determined turbulence intensity and the determined location of the turbulence.

## Description

### BACKGROUND OF THE INVENTION

Aircraft weather radars display hazardous weather information based upon analyzed radar returns. Radar return information corresponding to detected hazardous weather information is presented to the aircraft crew on a display, typically using a plan view showing a geographic area over which the aircraft is traversing. Some radar systems may be optionally configured to present a selected portion of the hazardous weather information corresponding to vertical slice view along a selected azimuth relative to the aircraft, such as along the aircraft's heading. Such a vertical slice displays the altitude and relative distance from the aircraft of any hazardous weather that lies along the selected vertical slice.

Processing systems which analyze and interpret the received hazardous weather information are becoming increasingly more computationally efficient such that larger amounts of hazardous weather information may be more quickly and efficiently processed. Accordingly, it is desirable to present additional information corresponding to the hazardous weather information displayed along a selected vertical slice.

### SUMMARY OF THE INVENTION

Systems and methods of presenting on a display a vertical view of intensities of turbulence regions are disclosed. An exemplary embodiment has a radar operable to detect turbulence, a processing system operable to determine location and intensity of the detected turbulence, a three-dimensional (3-D) weather information database comprising of a plurality of voxels that is associated with a unique geographic location with respect to the aircraft wherein the information corresponding to the turbulence intensity is stored, and a display operable to display a vertical view of a selected vertical slice, wherein the displayed vertical view displays the determined turbulence intensity and the determined location of the turbulence.

In accordance with further aspects, an exemplary embodiment receives radar return information, identifies at least a first turbulence region and a second turbulence region from the received radar return information, determines a first location of the first turbulence region and a second location of the second turbulence region and determines a first severity of the first turbulence region and a second severity of the second turbulence region. Based upon a selected vertical slice, the embodiment identifies a first portion of the first turbulence region and a second portion of the second turbulence region that lies along the selected vertical slice based upon the first location of the first turbulence region and the second location of the second turbulence region and then displays a vertical slice view of the first portion of the first turbulence region and the second portion of the second turbulence region, wherein the vertical slice view indicates a first altitude and a first intensity of the first portion of the first turbulence region that lies along the selected vertical slice, and wherein the vertical slice view indicates a second altitude and a second intensity of the second portion of the second turbulence region that lies along the selected vertical slice.

### BRIEF DESCRIPTION OF THE DRAWINGS

Preferred and alternative embodiments are described in detail below with reference to the following drawings:

FIGURE 1 is a perspective view of a portion of a planned flight path of an aircraft through a region of space having a plurality of storm cells and turbulence regions;

FIGURE 2 is a block diagram of an embodiment of the vertical display and turbulence discriminating system;

FIGURE 3 is a conceptual perspective view of a portion of a three-dimensional (3D) weather information memory block comprised of a plurality of voxels;

FIGURE 4 is a display image presenting a plan view of the planned flight path through the region of space having the plurality of storm cells and turbulence regions;

FIGURE 5 is a conceptual perspective view of a vertical slice of voxels aligned along the flight path; and

FIGURE 6 is a vertical slice view displaying the weather information corresponding to the voxels of the vertical slice.

### DETAILED DESCRIPTION OF THE PREFERRED EMBODIMENT

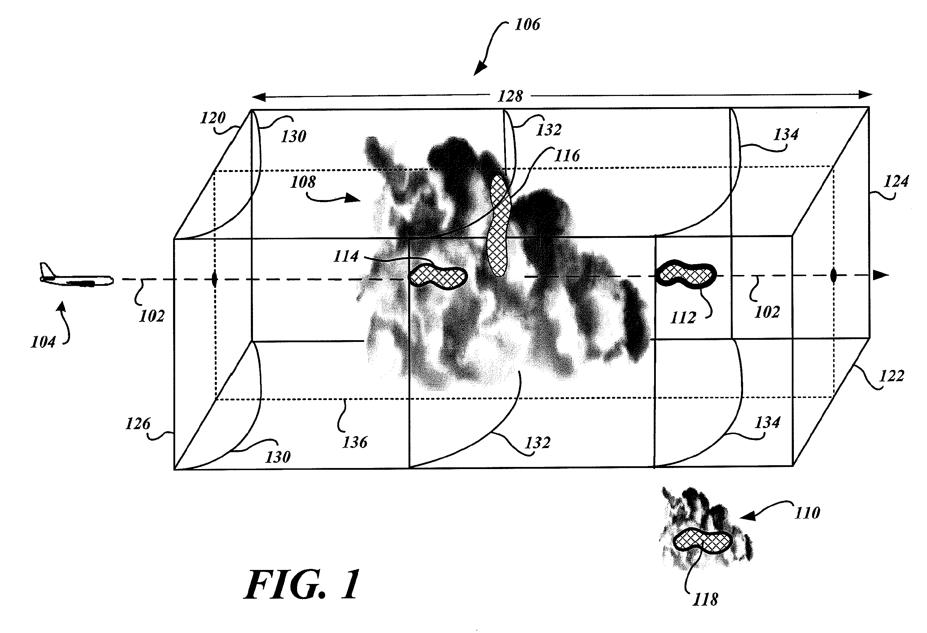

FIGURE 1 is a perspective view of a portion of a planned flight path 102 of an aircraft 104 through a region of space 106 having different types of weather. The weather in this example includes a plurality of storm cells 108, 110, and turbulence regions 112, 114, 116, 118. The term "weather" generally refers to any type of weather radar detectable weather phenomena, such as, but not limited to, storm cells, turbulence regions, clouds, precipitation, hail, snow, wind shear, icing conditions, and the like that an aircraft 104 may encounter.

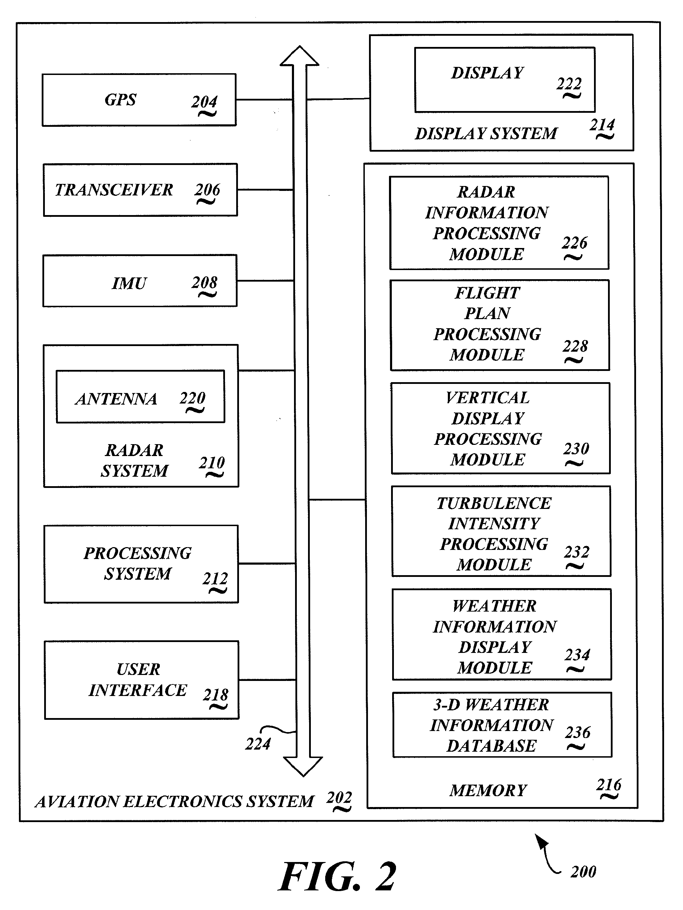

The turbulence region 112 resides beyond the storm cell 108 and generally lies along the flight path 102. The turbulence regions 114 and 116 reside in the storm cell 108. The turbulence region 118 resides in the storm cell 110. The turbulence regions 112, 114, 116, 118 are conceptually illustrated as cross-hatched regions for delineation from the storm cells 108, 110. Severity of the turbulence regions is conceptually indicated by boldness of the turbulence region outline. For example, the turbulence region 112 is more severe than the turbulence regions 114, 116, 118. The turbulence region 116 is less severe than the turbulence regions 112, 114, 118. Thus, embodiments of a vertical display and turbulence discriminating system 200 (FIGURE 2) discriminate between the relative levels of severity of detected turbulence, and thus determine levels of hazard to the aircraft 104.

For illustration purposes, the planned flight path 102 is arbitrarily bounded by the region of space 106 that is defined by an upper altitude threshold 120, a lower altitude threshold 122, two lateral thresholds 124, 126, and a range threshold 128. The lower altitude threshold 122 is defined by a distance below the planned flight path 102 and the upper altitude threshold 120 is defined by a distance above the planned flight path 102. The lateral thresholds 124, 126 are defined by distances to either side of the planned flight path 102. The range threshold 128 is defined by a distance from the aircraft 104 along the planned flight path 102. The distances defining the altitude thresholds 120, 122, the lateral thresholds 124, 126, and the range threshold 128 may be the same or different. Further, the distances may be predefined or adjustable. For example, the range threshold 128 may be automatically adjustable to correspond to other information displayed to the crew members of the aircraft 104 and/or may be manually adjustable to a range of interest by the crew members of the aircraft 104.

Various range distances 130, 132, 134 out from the aircraft 104 are also illustrated. These distances 130, 132, 134 may be displayed to the crew, and indicate the relative distance of the storm cells 108, 110 and the turbulence regions 112, 114, 116, 118 from the aircraft 104.

A vertical slice 136 is also conceptually illustrated in FIGURE 1. The vertical slice 136 corresponds to a portion of the region of space 106. Here, the vertical slice 136 is aligned along the flight path 102, and is arbitrarily bounded by the upper altitude threshold 120, the lower altitude threshold 122, and the range 128. The vertical slice 136, in some embodiments, may be a two dimensional plane (no thickness). In other embodiments, the vertical slice 136 may be further defined by a thickness. In the various embodiments, the vertical slice 136 may have its bounds predefined. Alternatively, other embodiments, may allow the crew of the aircraft 104 to specify one or more of the bounds of the vertical slice 136. For example, the vertical slice 136 may be selectably defined by an azimuth from the aircraft 104 and/or a thickness that is of interest to the crew.

Embodiments of the vertical display and turbulence discriminating system 200 (FIGURE 2) are configured to determine severity levels of turbulence regions, and are further configured to format and present icons in a vertical view corresponding to the vertical slice 136. Accordingly, the crew member may assess the relative degree of hazard and the altitude of turbulence regions of interest that are displayed on the vertical view.

FIGURE 2 is a block diagram of an exemplary embodiment of the vertical display and turbulence discriminating system 200 implemented in an aviation electronics system 202 of the aircraft 104. The aviation electronics system 202 includes a global positioning system (GPS) 204, a transceiver 206, an inertial measurement unit (IMU) 208, a radar system 210, a processing system 212, a display system 214, a memory 216, and a crew interface 218. The radar system 210 includes an antenna 220 that is operable to emit radar signals and receive radar returns. The display system 214 includes a display 222. It is appreciated that the aviation electronics system 202 includes many other components and/or systems that are not illustrated or described herein.

The above-described components, in an exemplary embodiment, are communicatively coupled together via communication bus 224. In alternative embodiments of the aviation electronics system 202, the above-described components may be communicatively coupled to each other in a different manner. For example, one or more of the above-described components may be directly coupled to the processing system 212, or may be coupled to the processing system 212 via intermediary components (not shown).

The radar system 210 may be any suitable radar system, such as, but not limited to, a weather radar that is operable to detect weather that is located relatively far away from the aircraft 104. The antenna 220 is operable to emit radar pulses and to receive radar returns. A radar return is reflected energy from an object upon which the emitted radar pulse is incident on. The antenna 220 is swept in a back-and-forth motion, in an up and down direction, and/or in other directions of interest, such that the radar system 210 is able to detect weather, and more particularly turbulence, in an area of interest about the aircraft 104. Embodiments of the vertical display and turbulence discriminating system 200 may be implemented in other types and/or applications of radar, such as marine radar.

An exemplary embodiment of the vertical display and turbulence discriminating system 200 comprises a plurality of cooperatively acting modules. The modules are identified as a radar information processing module 226, a flight plan processing module 228, a vertical display processing module 230, a turbulence intensity processing module 232, and a weather information display module 234. Modules 226, 228, 230, 232, 234 reside in the memory 216, and are retrieved and executed by the processing system 212. In an exemplary embodiment, a three-dimensional (3-D) weather information database 236 is stored in memory 216. In other embodiments, the modules 226, 228, 230, 232, 234 may be implemented together as a common module, may be integrated into other modules, or reside in other memories (not shown). Further, the 3-D weather information database 236 may be implemented with other databases, may be implemented in various formats, such as a buffer or the like, and/or may be implemented in another memory.

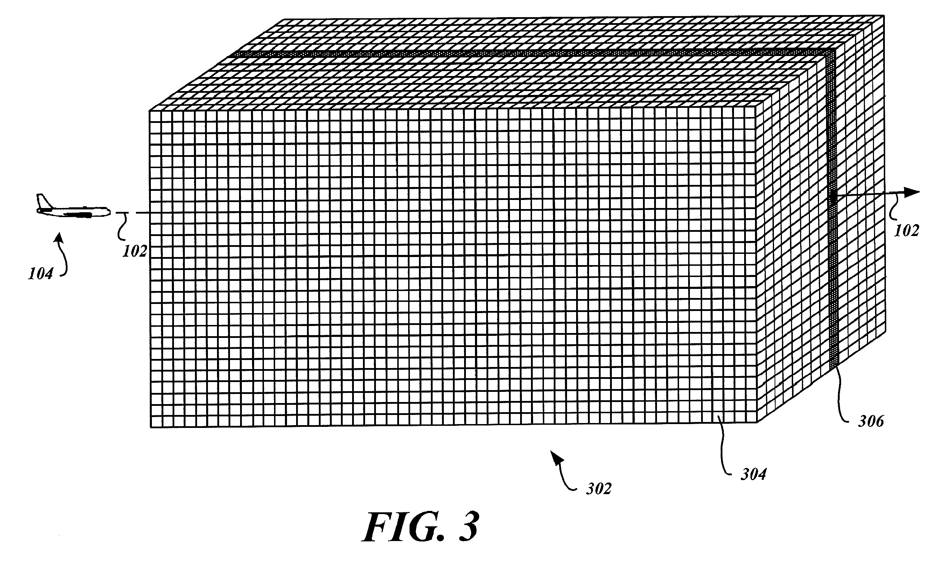

FIGURE 3 conceptually illustrates a portion 302 of the 3-D weather information database 236 as a region of discrete volumes defined as a range bin. Each range bin corresponding to one of the volumes, referred to herein as a voxel 304. The voxels 304 uniquely correspond to a geographic location of space relative to the aircraft (or another suitable reference). Geographic reference to location may use any suitable coordinate system. An exemplary embodiment of the 3-D weather information database 236 is implemented in accordance with the commonly assigned U.S. patent 6,667,710, filed on February 19, 2002, to Cornell et al., which is incorporated herein by reference in its entirety.

Weather information corresponding to the geographic location of each voxel 304 is saved into the 3-D weather information database 236. Accordingly, a 3-D weather information map or the like may be constructed based upon radar returns from weather about the aircraft 104. Time stamps and other information of interest may also be included.

Also illustrated in FIGURE 3 is a vertical slice 306 of voxels 304. The exemplary vertical slice 306 is aligned with the flight path 102 of the aircraft 104. Any vertical slice of voxels 304 could be selected, such as along a selected azimuth from the aircraft 104. The vertical slice 306 may be linear or curvilinear. Thus, embodiments identify a first portion of a first turbulence region (such as the turbulence region 114) and a second portion of a second turbulence region (such as the turbulence region 112) that lies along the selected vertical slice 306 based upon the location of the first turbulence region and the location of the second turbulence region.

Alternatively, multiple slices of voxels 304 may be combined to generate a thicker vertical slice 306. That is, embodiments identify at least two vertical slices of voxels based upon the selected vertical slice 306 from a plurality of voxels 304 in the three-dimensional (3-D) weather information database 236. Then, the weather information residing in respective adjacent voxels 304 are combined to generate the thicker vertical slice 306. Combining weather information in adjacent voxels 304 may be done in a variety of manners. One embodiment may average turbulence intensity information for adjacent voxels 304. Another embodiment may select the most severe turbulence intensity information from adjacent voxels 304.

The radar information processing module 226 processes radar returns detected by the antenna 220 of the radar system 210. Various types of weather, and their associated attributes, are determined by the radar information processing module 226. More particularly, radar return information is determined for the detected turbulence regions. Selected determined weather information is saved into the corresponding voxels 304 of 3-D weather information database 236.

The weather information display module 234 accesses the weather information stored in the 3-D weather information database 236 and constructs a displayable image corresponding to a graphical presentation of the weather information. The displayable image of the weather information is communicated to the display system 214 and is presented on the display 222.

The flight plan processing module 228 processes flight plan information. Flight plans may be predefined and/or entered by the crew. A predefined flight plan typically comprises a plurality of planned flight path segments based upon a series of waypoints. Planned flight path segments may be straight or curvilinear. The flight plan information includes geographic location information that defines location of waypoints and/or the flight path segments, and planned altitude information. The flight plan information may optionally include various limits, such as altitude floors, altitude ceilings, and/or exclusion regions or zones. In some embodiments, the flight plan may be dynamically adjusted during flight based upon crew input, based upon current location of the aircraft 104 as provided by the GPS 204 and/or the IMU 208, and/or based upon instructions or information received by the transceiver 206.

The turbulence intensity processing module 232 further processes radar return information to determine turbulence intensity information for detected turbulence and location of the turbulence region. The turbulence intensity information and location information is saved into the 3-D weather information database 236, preferably in the voxel 304 which corresponds to the geographic location of the detected turbulence.

The vertical display processing module 230 retrieves weather information, and more particularly the turbulence location and turbulence intensity information, along a predefined or selected vertical plane, such as the vertical slice 306 (FIGURE 3). The retrieved weather information is communicated to the weather information display module 234, which prepares an image corresponding to the vertical slice 306 showing the weather information. The vertical slice image is displayed on the display 222.

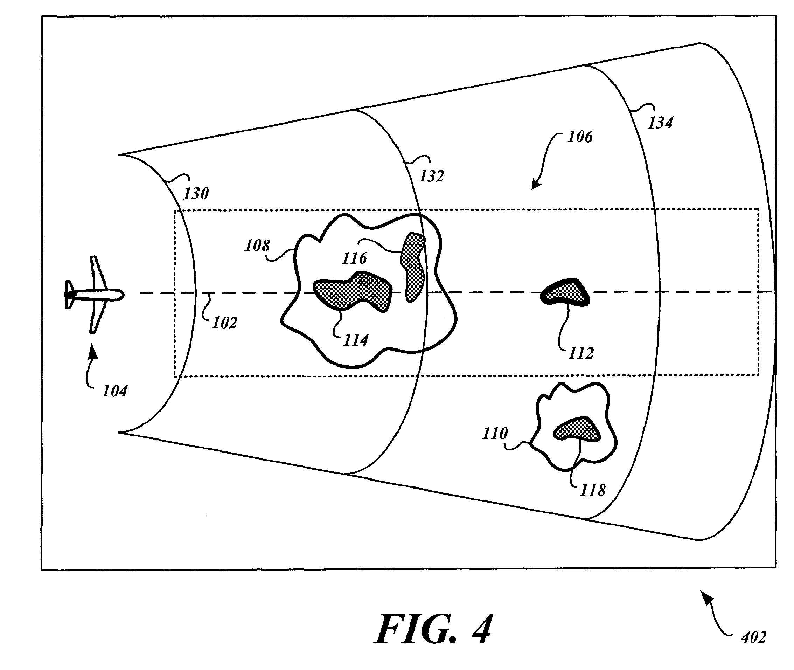

FIGURE 4 is a conceptual image display displayed on display 222 presenting a plan view 402 of the planned flight path 102 through the region of space 106. The plan view 402 displays the plurality of storm cells 108, 110 and turbulence regions 112, 114, 116, 118. Similar to FIGURE 1, reference numerals of the icons of FIGURE 4 correspond to the reference numerals of the storm cells 108, 110 and the turbulence regions 112, 114, 116, 118 of FIGURE 1 for convenience.

In this exemplary embodiment, the intensity of the turbulence regions 112, 114, 116, 118 is indicated by the bold outlining of the displayed turbulence icon. Embodiments may use different selected icon formats (fill pattern schemes, fill color schemes, and/or intensity schemes) to differentiate the intensity of turbulence regions. For example, one embodiment may use a predefined color, such as magenta, to indicate turbulence. More severe, and thus more hazardous, turbulence regions are identified using progressively brighter (and/or darker) shades of magenta. Further, the displayed turbulence region is overlaid on top of icons representing other types of weather. For example, the icons representing the turbulence regions 114, 116, are overlaid on the icon representing the storm cell 108. In some embodiments, a single turbulence region may have portions with different intensities, where such different intensities are indicated as noted above.

It is appreciated that the plan view 402 does not indicate altitude information of the displayed weather information. For example, the crew of the aircraft 104 cannot ascertain, in the absence of supplemental information, the relative vertical position of the turbulence regions 112, 114, 116, 118 with respect to the planned flight path 102.

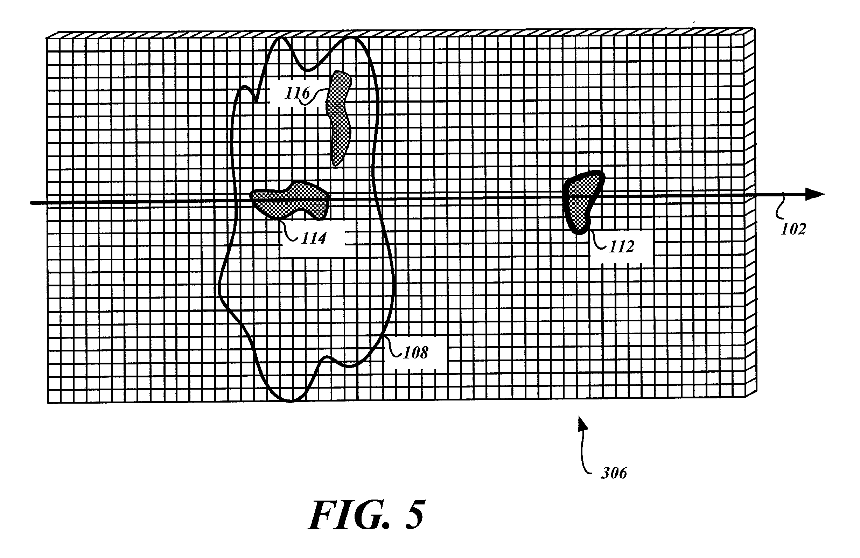

FIGURE 5 is a conceptual perspective view of the vertical slice 306 of voxels 304 aligned along the flight path 102 of the aircraft 104. To conceptually illustrate the weather information stored in the various voxels 304 of the vertical slice 306, the turbulence regions 112, 114, 116 and the storm cell 108 are illustrated. The weather information along the vertical slice 306 is retrieved by the weather information display module 234 from the 3-D weather information database 236. Similar to FIGURE 1, reference numerals of the icons of FIGURE 5 correspond to the reference numerals of FIGURE 1 for convenience.

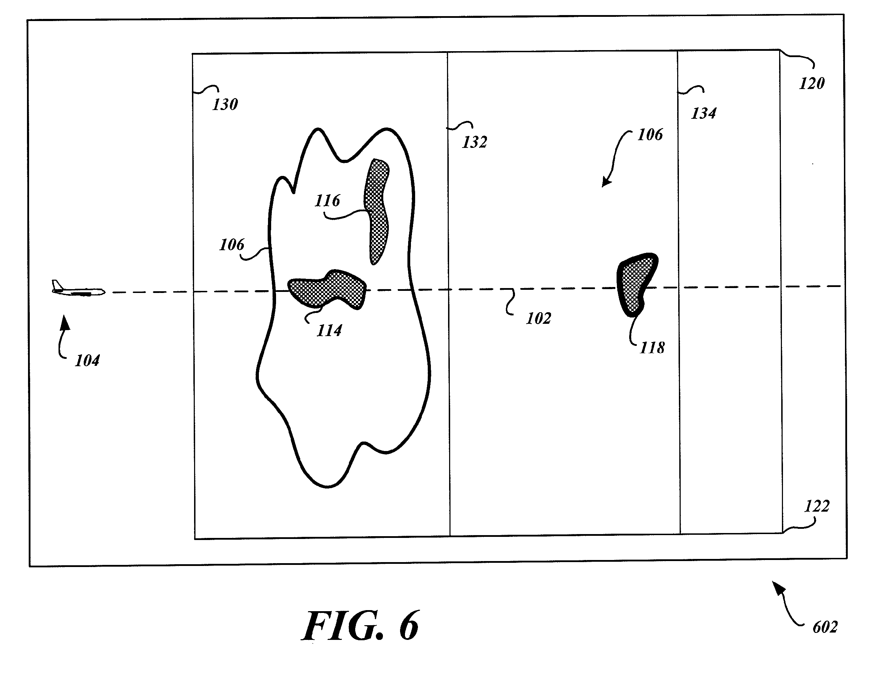

FIGURE 6 is a vertical slice view 602 displaying the weather information corresponding to the voxels of the vertical slice 306. Similar to FIGURE 1, reference numerals of the icons of FIGURE 6 correspond to the reference numerals of FIGURE 1 for convenience. The displayed turbulence regions are displayed over other types of weather information, such as displayed the storm cells.

The vertical slice view 602 shows the relative position of the turbulence regions 114, 116, 118 with the flight path 102. Further, relative intensity, and thus severity, of the turbulence regions 114, 116, 118 are discernable to the crew viewing the vertical slice view 602 on the display 222. Accordingly, the crew appreciates that the aircraft 104, if it stays on course in accordance with the flight path 102, will traverse through the storm cell 108, and while in the storm cell 108, will traverse through the moderately severe turbulence region 114. Further, the crew will appreciate that the aircraft will not pass through the turbulence region 116 since it lies above the flight path 102. And finally, the crew will appreciate that the aircraft 104 will pass through the severe turbulence region 118, which lies beyond the storm cell 108, if the aircraft remains on the planned flight path 102.

In view that the flight path 102, as planned, will result in the aircraft 104 traversing through relatively severe turbulence, the crew may elect to change to a different flight path. For example, the crew may elect to decrease altitude so as to pass underneath the turbulence regions 114, 118.

Embodiments provide for adjustment of the vertical slice view 602. For example, the illustrative vertical slice view 602 is bounded by the altitude ceiling 120 and the altitude floor 122. Some embodiments permit manual selection of the presented altitudes and/or the presented range on the displayed vertical slice view 602. Some embodiments may permit the crew to select a magnified view, or zoomed view, of a selected portion of the vertical slice view 602.

Further, the vertical slice view 602 may be dynamically and automatically adjusted based upon changes in the flight path 102. For example, the crew may decide to re-route the aircraft 104 around the storm cell 108 to avoid the turbulence region 114 (and presumably, to avoid the turbulence region 112 that is beyond the storm cell 108). Upon adjustment of the flight plan by the crew, the flight plan processing module 228 and the weather information display module 234 would cooperatively identify a plurality of new vertical slices corresponding to the updated planned flight path, and present the vertical slice view 602 showing the weather information along the new planned flight path.

Embodiments of the vertical display and turbulence discriminating system 200 may be configured to present a vertical slice view 602 corresponding to any selected vertical slice of space for which weather information is available in the 3-D weather information database 236. For example, a planned flight path may be comprised of a plurality of flight path segments (with different directions) connected by waypoints. The flight plan processing module 228 and the weather information display module 234 would cooperatively identify a plurality of vertical slices corresponding to the planned flight path, and present the vertical slice view 602 showing the weather information along the planned flight path. Way- points may also be indicated on the vertical slice view 602 for such flight paths that are comprised of a series of flight path segments.

In some embodiments, both the vertical slice view 602 (FIGURE 6) and the plan view 402 (FIGURE 4) are concurrently displayed on the display 222 (FIGURE 2). Thus, the crew of the aircraft 104 may more readily correlate the weather information that is available in the 3-D weather information database 236.

Embodiments of the vertical display and turbulence discriminating system 200 may be implemented in a variety of formats, such as but not limited to, firmware, software or other computer-readable medium executed by the processing system 212. Also, embodiments of the vertical display and turbulence discriminating system 200 may be implemented as a combination of hardware and firmware. Any such implementations of the vertical display and turbulence discriminating system 200 are intended to be within the scope of this disclosure.

## Claims

1. A method for presenting on a display (222) a vertical view of intensities of turbulence regions (112, 114, 116), the method comprising:
receiving radar return information;
identifying at least a first turbulence region and a second turbulence region from the received radar return information;
determining a first location of the first turbulence region and a second location of the second turbulence region;
determining a first severity of the first turbulence region and a second severity of the second turbulence region;
selecting a vertical slice (306);
identifying a first portion of the first turbulence region and a second portion of the second turbulence region that lies along the selected vertical slice (306) based upon the first location of the first turbulence region and the second location of the second turbulence region; and
displaying a vertical slice view (602) of the first portion of the first turbulence region and the second portion of the second turbulence region, wherein the vertical slice view (602) indicates a first altitude and a first intensity of the first portion of the first turbulence region that lies along the selected vertical slice (306), and wherein the vertical slice view (602) indicates a second altitude and a second intensity of the second portion of the second turbulence region that lies along the selected vertical slice (306).

2. The method of Claim 1, wherein determining the first location of the first turbulence region and determining the second location of the second turbulence region comprises:
identifying the first location of the first turbulence region and the second location of the second turbulence region with respect to a plurality of voxels of a three-dimensional (3-D) weather information database (236); and
storing information corresponding to the first location of the first turbulence region and the second location of the second turbulence region in the voxels based upon a corresponding location of the voxels.

3. The method of Claim 2, wherein determining the first severity of the first turbulence region and determining the second severity of the second turbulence region comprises:
identifying the first severity of the first turbulence region and the second severity of the second turbulence region with respect to the plurality of voxels of the 3-D weather information database (236); and
storing information corresponding to the first severity of the first turbulence region and the second severity of the second turbulence region in the voxels based upon the location of the voxels.

4. The method of Claim 1, wherein selecting the vertical slice (306) further comprises:
selecting the vertical slice (306) based upon a planned flight path (102).

5. The method of Claim 4, wherein selecting the vertical slice (306) further comprises:
receiving a change in the planned flight path (102) to a new planned flight path; and
dynamically selecting a new vertical slice based upon the new planned flight path.

6. The method of Claim 1, wherein selecting the vertical slice (306) further comprises:
from a plurality of voxels in a three-dimensional (3-D) weather information database (236), identifying at least two vertical slices of voxels based upon the selected vertical slice; and
combining the turbulence intensity information residing in respective adjacent voxels to generate the vertical slice view (602).

7. The method of Claim 1, wherein displaying the first portion of the first turbulence region and the second portion of the second turbulence region comprises:
displaying the first portion of the first turbulence region over other types of weather information; and
displaying the second portion of the second turbulence region over the other types of weather information.

8. A weather radar system operable to detect weather in proximity to an aircraft (104), comprising:
a radar (210) operable to detect turbulence;
a processing system (212) operable to determine location and intensity of the detected turbulence;
a three-dimensional (3-D) weather information database (236) comprising of a plurality of voxels, each voxel associated with a unique geographic location with respect to the aircraft (104), and operable to store the information corresponding to the turbulence intensity in the voxels based upon the location of the detected turbulence; and
a display (222) operable to display a vertical view of a selected vertical slice (306), wherein the displayed vertical view (602) displays the determined turbulence intensity and the determined location of the turbulence.

9. The weather radar system of Claim 8, further comprising:
a user interface (218) operable to receive a specification of the selected vertical slice (306).

10. The weather radar system of Claim 8, wherein the processing system (212) is operable to change the displayed vertical view (602) based upon a new planned flight path.
